Europäisches Patentamt

European Patent Office

Office européen des brevets

(19)

(11) **EP 1 053 439 B1**

(12) **FASCICULE DE BREVET EUROPEEN**

(45) Date de publication et mention
de la délivrance du brevet:
**29.01.2003 Bulletin 2003/05**

(51) Int Cl.⁷: **F25B 49/04**, F25B 17/08

(21) Numéro de dépôt: **99901688.4**

(22) Date de dépôt: **02.02.1999**

(86) Numéro de dépôt international:
**PCT/FR99/00213**

(87) Numéro de publication internationale:
**WO 99/040380 (12.08.1999 Gazette 1999/32)**

(54) **PROCEDE DE GESTION D'UNE REACTION THERMOCHIMIQUE OU D'UNE ADSORPTION SOLIDE-GAZ OU D'UNE ABSORPTION LIQUIDE-GAZ**

BEHERRSCHUNGSVERFAHREN EINER THERMOCHEMISCHEN REAKTION ODER EINER ADSORPTION ZWISCHEN EINEM FESTEN KÖRPER UND EINEM GAS ODER EINER ABSORPTION ZWISCHEN EINER FLÜSSIGKEIT UND EINEM GAS

METHOD FOR CONTROLLING A THERMOCHEMICAL REACTION OR A SOLID-GAS ADSORPTION OR A LIQUID-GAS ABSORPTION

(84) Etats contractants désignés:
**AT BE CH DE DK ES FI FR GB GR IE IT LI LU NL PT SE**

(30) Priorité: **03.02.1998 FR 9801236**

(43) Date de publication de la demande:
**22.11.2000 Bulletin 2000/47**

(73) Titulaire: **CENTRE NATIONAL DE LA RECHERCHE SCIENTIFIQUE (CNRS) 75016 Paris (FR)**

(72) Inventeurs:
• **PY, Xavier**
  **F-66680 Canohes (FR)**

• **KINDBEITER, Francis**
  **F-66100 Perpignan (FR)**

(74) Mandataire: **Sueur, Yvette et al**
  **Cabinet SUEUR & L'HELGOUALCH,**
  **109, boulevard Haussmann**
  **75008 Paris (FR)**

(56) Documents cités:
| | |
|---|---|
| EP-A- 0 425 368 | EP-A- 0 735 124 |
| EP-A- 0 810 410 | CH-A- 166 909 |
| DE-C- 549 343 | FR-A- 652 823 |
| FR-A- 751 102 | FR-A- 1 007 830 |
| FR-A- 2 342 471 | FR-A- 2 474 662 |
| US-A- 2 068 891 | US-A- 5 441 716 |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé de gestion d'une réaction thermochimique ou d'une adsorption solide-gaz ou d'une absorption liquide-gaz permettant la production de froid et/ou de chaleur.

Une réaction thermochimique, ou une adsorption est fondée sur une réaction réversible entre un solide et un gaz et peut être schématisée par l'équation :

$$< \text{solide A} > + < G > \xrightarrow{\quad 1 \quad} < \text{solide B} >$$
$$\xleftarrow{\quad 2 \quad}$$

Dans le réacteur, la réaction est exothermique dans le sens 1, ce qui veut dire que dans ce sens elle produit de la chaleur, et elle est endothermique dans le sens 2. Dans le sens 1, elle produit également du froid dans l'évaporateur associé par évaporation du gaz (G).

Un tel système permet le stockage d'énergie sous forme chimique ou physique et présente des domaines d'application variés.

De manière classique, ce type de réaction thermochimique, ou à adsorption, a pour siège un système comprenant une enceinte, appelée "réacteur", contenant un sel ou un adsorbant et, de préférence, un liant expansé, bon conducteur thermique. Le réacteur est agencé de façon à pouvoir être sélectivement mis en communication avec une deuxième enceinte formant un ensemble évaporateur/condenseur pour le gaz destiné à réagir avec le sel. Cette communication s'effectue par un conduit muni d'une vanne de commande. Lors d'un cycle de réaction ou d'adsorption classique la vanne est ouverte ce qui permet au gaz présent sous forme liquide dans l'évaporateur de s'évaporer et de passer par le conduit afin de réagir avec le sel ou l'adsorbant présent dans le réacteur, avec pour résultat un refroidissement dans l'évaporateur. A la fin de la phase d'évaporation, le sel ou l'adsorbant dans le réacteur est chauffé, par exemple au moyen d'une résistance électrique, ce qui provoque le refoulement du gaz vers le condenseur. La vanne de commande permet d'arrêter le cycle de réaction à tout moment.

Afin de permettre une production continue de froid et/ou de chaleur, deux sous-ensembles analogues peuvent être disposés côte à côte, l'un produisant du froid et/ou de la chaleur pendant que l'autre est en phase de régénération.

Un exemple d'un système thermochimique comportant deux sous-ensembles de ce type est décrit dans le document : EP-A-0 382 586. Dans ce système, l'ensemble évaporateur/condenseur de chaque sous-ensemble comprend un réacteur pouvant absorber ou désorber le gaz. Les conduits reliant les réacteurs sont chacun muni d'une vanne de commande du passage de gaz. Les vannes de commande forment les seuls moyens permettant de mettre en oeuvre ou d'arrêter la réaction thermochimique ou l'adsorption/désorption.

L'utilisation de vannes de commande dans les conduits reliant les réacteurs présente deux inconvénients.

Chaque vanne nécessite un actionneur associé pour l'ouvrir ou la fermer, ce qui augmente le coût et la complexité du système. Mais de plus, la présence des vannes augmente le risque de fuites de gaz du système. Ce risque de fuite de gaz, par exemple de l'ammoniac, réduite le nombre d'applications pratiques de ce type de système thermochimique.

Un autre exemple d'installation pour produire en permanence du froid est décrit dans DE-C-549 343. Le dispositif fonctionne avec échange de gaz entre un premier réacteur contenant un solide ayant une grande affinité pour le gaz, et un réacteur second contenant un solide ayant une affinité plus faible pour le gaz (jouant le même rôle que l'ensemble évaporateur-condenseur du dispositif décrit ci-dessus). Les deux réacteurs sont reliés par un conduit. Ce dispositif fonctionne par une succession d'étapes de régénération et de production de froid. La régénération est effectuée par apport de chaleur au premier réacteur dont le contenu libère du gaz qui se transfère dans le second réacteur dans lequel il se condense en libérant de la chaleur qui est évacuée vers l'extérieur. Dès la fin de cette étape de régénération, on isole le second réacteur de l'extérieur et on laisse refroidir le premier réacteur, ce qui provoque l'étape de synthèse dans le premier réacteur avec appel de gaz en provenance du second réacteur et production de froid dans ledit second réacteur. Le dispositif fonctionne ainsi avec une succession ininterrompue d'étapes de régénération et d'étapes de production de froid.

La présente invention a donc pour objet un procédé de gestion d'une réaction thermochimique ou d'une adsorption/désorption ou d'une absorption/désorption qui ne nécessite la présence d'aucune vanne de commande dans le système thermochimique.

Dans le cas où un système thermochimique est destiné à produire du froid, il comprend à cette fin un réacteur unique relié à un ensemble évaporateur/condenseur. Si, lorsque ce système est en phase de production de froid, on arrête la réaction en fermant une vanne de commande, la température de l'évaporateur aura tendance à croître, sous l'effet de l'air ambiant, pendant que la réaction est arrêtée. Ensuite, lorsque la réaction est redémarrée en rouvrant la vanne, il y a un temps pendant lequel la réaction thermochimique ne sert qu'à faire baisser la température de l'évaporateur jusqu'à son niveau précédant l'arrêt. L'énergie de la réaction thermochimique, pendant cette phase, est donc perdue.

La présente invention a comme deuxième objet un procédé de gestion d'une réaction thermochimique qui assure que, lors de chaque arrêt, la température de l'évaporateur ne varie pas de façon sensible, ou varie uniquement de manière favorable.

Pour répondre à ces objets, la présente invention propose un procédé de gestion d'une réaction thermochimique ou d'une adsorption solide-gaz ou d'une absorption liquide-gaz ayant pour siège un premier réacteur contenant un agent actif apte à réagir de manière réversible avec un gaz, le réacteur étant relié à un ensemble évaporateur/condenseur, respectivement à un second réacteur contenant un autre agent actif, par une liaison dépourvue d'une vanne de commande, le réacteur et l'ensemble évaporateur/condenseur, respectivement le second réacteur, étant munis chacun de moyens permettant d'échanger sélectivement des calories avec l'environnement, caractérisé en ce que le procédé de gestion comporte les étapes consistant à :

- isoler thermiquement le premier réacteur et l'ensemble évaporateur/condenseur, respectivement le second réacteur, de leur environnement :
- mettre le premier réacteur en communication avec son environnement afin que l'agent actif réagisse avec le gaz, , avec production de froid à l'évaporateur, respectivement dans le second réacteur ;
- mettre l'évaporateur, respectivement le second réacteur, en communication thermique avec son environnement afin de refroidir sélectivement celui-ci ; et
- isoler, sélectivement, le premier réacteur ou l'ensemble évaporateur/condenseur, respectivement le second réacteur, de leur environnement afin d'arrêter la réaction en un point du cycle réversible.

Les avantages, ainsi que le fonctionnement de la présente invention apparaîtront plus clairement à la lecture de la description suivante, faite en référence aux dessins annexés sur lesquels :

- la figure 1 est une vue schématique d'un système thermochimique permettant la mise en oeuvre du procédé selon l'invention; et
- les figures 2 à 4 représentent chacune un diagramme de Clapeyron illustrant une phase du procédé selon l'invention, dans le cas de réactions monovariantes à l'équilibre.

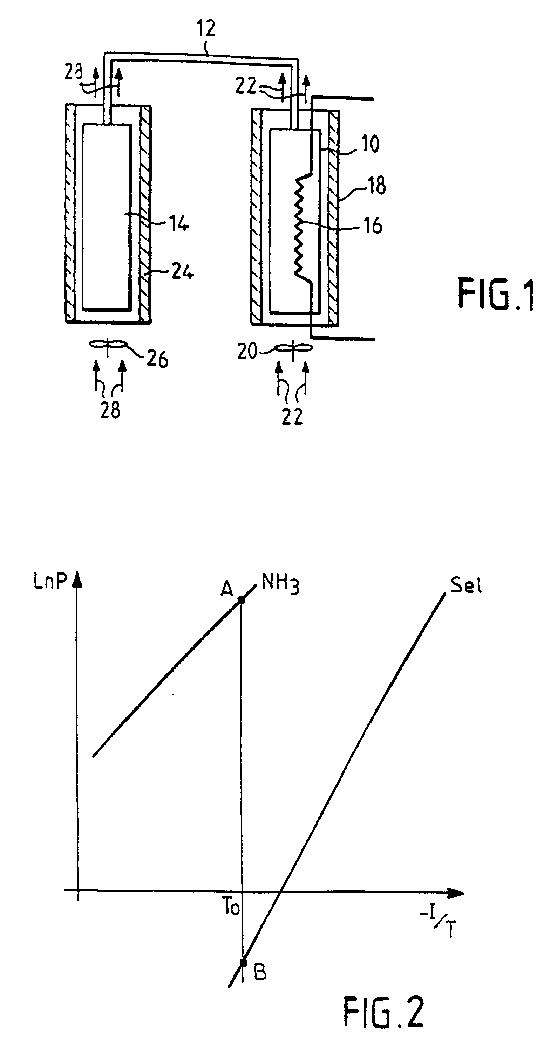

Comme représenté sur la figure 1, un système thermochimique comprend un réacteur 10 destiné à contenir un agent actif apte à réagir de manière réversible avec un gaz. De préférence, l'agent actif comprend un sel, le gaz étant de l'ammoniac. Dans un mode de réalisation préféré, le sel est dispersé dans un liant comprenant du graphite expansé, éventuellement recomprimé. Le réacteur 10 est relié, par une conduite 12, à un ensemble évaporateur/condenseur 14. De plus le réacteur est muni d'un moyen de réchauffage 16 destiné à permettre à la réaction thermochimique entre le sel et le gaz d'évoluer dans le sens d'une régénération. De préférence, le moyen de réchauffage comprend une résistance électrique. Un manchon 18 en matériau thermiquement isolant est disposé autour du réacteur 10. Les extrémités du manchon 18 sont ouvertes, ce qui permet à de l'air, pulsé par un ventilateur 20, de passer autour du réacteur 10 dans le sens des flèches 22. Un manchon 24, également en matériau isolant, est disposé autour de l'ensemble évaporateur/condenseur et comporte des extrémités ouvertes, ce qui permet, de manière analogue, à de l'air, pulsé par un ventilateur 26, de passer autour de l'ensemble dans le sens des flèches 28.

Selon l'invention, le conduit 12 n'est pas muni d'une vanne de commande, le passage entre le réacteur 10 et l'ensemble évaporateur/condenseur étant en permanence ouvert.

Le procédé de gestion de la réaction thermochimique, ayant pour siège le système de la figure 1, sera maintenant décrit.

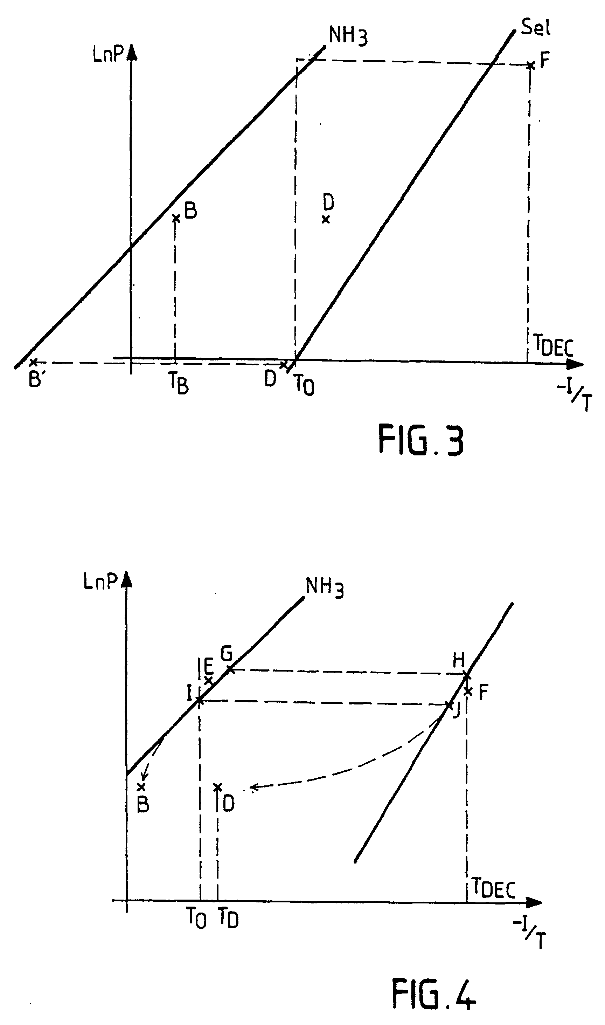

Sur le diagramme de Clapeyron de la figure 2 sont représentées les droites d'équilibre des transformations monovariantes liquide-gaz de l'ammoniac, marquée $NH_3$ et solide-gaz d'un sel réagissant avec l'ammoniac, marquée « sel ». Si les deux éléments 10 et 14 de la figure 1 &taient séparés par une vanne placée sur le conduit 12, les pression et température d'équilibre de ces deux éléments à la température ambiante $T_o$ seraient celles définies en A et B respectivement. Plaçons nous dans le cas où le conduit 12 n'est pas muni d'une vanne de commande et que le système vient de produire du froid à la température $T_B$ (voir la figure 3) l'évaporateur se situe au point B et le réacteur se trouve au point D avec un écart par rapport à la droite d'équilibre du sel. Vers la fin de la réaction thermochimique, quand tout l'ammoniac a réagi avec le sel, la pression dans le système est imposée par le réacteur. Ainsi, la pression du système va baisser vers le point D', l'évaporateur tendant vers le point B'.

Quand il est souhaité de régénérer le système, on impose la température désirée au réacteur $T_{DEC}$, ce qui entraîne une montée en pression pour permettre la décomposition du sel, l'ammoniac étant refoulé vers le condenseur qui se trouve alors au point E, le réacteur se positionnant en F.

A la fin de la phase de régénération, l'équilibre est atteint, ce qui entraîne une montée de la pression du système qui vient se stabiliser aux points G concernant le condenseur et H concernant le réacteur, tant que le réacteur est à la température $T_{DEC}$ (voir la figure 4).

Lorsque l'on désire produire du froid à l'évaporateur, il suffit d'arrêter le maintien en température du réacteur à $T_{DEC.}$ Quand cette température n'est plus maintenue, le système se met à refroidir. L'évaporateur et le réacteur suivent respectivement les chemins GI et HJ, le point I correspondant à l'équilibre de l'évaporateur à la température To.

Comme le réacteur continue à se refroidir, la température $T_J$ du point J étant supérieure à To, il ensuit une chute de pression du système, ce qui conduit le réservoir à passer en-dessous de To, et donc, à faire du froid. L'évaporateur produira du froid au point B, avec un écart par rapport à la droite d'équilibre, le réacteur tendant vers le point D. Les positions B et D dépendent de la nature des échanges de chaleur associés à l'évaporateur et au réacteur, et donc des flux échangés. A la fin de cette phase de production de froid, où le sel contenu dans le réacteur est dépourvu d'ammoniac, le système se trouve dans sa position de départ, représentée à la figure 3.

Afin que le système thermochimique de la figure 1 puisse suivre le cycle de réaction décrit ci-dessus sans comporter de vanne de commande dans le conduit 12 reliant le réacteur 10 à l'ensemble évaporateur/condenseur, on met en oeuvre un procédé de gestion selon la présente invention.

Comme le réacteur 10 et l'ensemble évaporateur/condenseur 14 sont sensiblement isolés de l'air ambiant par leurs manchons respectifs 18, 24, l'échange de calories peut être géré en envoyant sélectivement un courant d'air à l'intérieur des manchons au moyen des ventilateurs 20 et 26. Si l'on empêche l'échange de calories , la réaction thermochimique soit s'arrêtera, soit évoluera très lentement.

Par exemple si l'on souhaite varier la production de froid, après le passage des points GH aux points BD dans le cycle de fonctionnement décrit ci-dessus, il suffit de commander le ventilateur 26 afin de contrôler l'échange de calories entre l'évaporateur et l'air. Si la ventilation est interrompue, elle conduira aux trajets de l'évaporateur du point B vers la droite d'équilibre en B', et du réacteur du point D vers l'équilibre à la température To, soit le point D'. Les points B' et D' correspondent à des positionnements légèrement hors équilibre, ces écarts entraînant des très faibles évaporation/réaction de synthèse dont la production de froid et la production de chaleur ne sont possibles que par les fuites à travers l'isolation des éléments 10 et 14. Lorsque l'on souhaite faire du froid à nouveau, la remise en marche du ventilateur reconduit le système aux points B et D.

De manière analogue, lorsque le système se trouve en phase de régénération, phase pendant laquelle de l'ammoniac se condense dans l'ensemble évaporateur/condenseur, la chaleur de condensation peut être sélectivement retirée en mettant en marche le ventilateur 26. Comme dans l'exemple précédent, si la ventilation est interrompue, le condenseur, ne pouvant plus libérer sa chaleur de condensation, arrête la réaction thermochimique.

Dans les deux exemples précédents, lorsque la réaction est arrêtée en empêchant le système d'échanger des calories avec l'air ambiant, le fait que le conduit reste ouvert entre le réacteur et l'ensemble évaporateur/condenseur a pour résultat que la réaction thermochimique se poursuit, bien que très lentement. Ainsi, la réaction tend à compenser uniquement les calories perdues par le système à travers l'isolation des manchons. Les températures du réacteur et de l'ensemble évaporateur/condenseur tendent donc à rester constantes.

Le procédé de gestion selon l'invention permet d'arrêter la réaction thermochimique à un point prédéterminé du cycle pendant un temps donné, la réaction ne consommant que la faible quantité d'ammoniac nécessaire pour compenser les pertes thermiques. Aussi, le système peut être maintenu à un point donné de son cycle, le cycle pouvant être redémarré à tout moment simplement en mettant en marche l'un des ventilateurs, ou les deux. Cette période d'attente ne consomme que peu d'ammoniac.

Ainsi, en chauffant sélectivement le réacteur et/ou en contrôlant l'échange de calories entre le réacteur ou l'ensemble évaporateur/condenseur et l'air ambiant, on peut gérer la réaction thermochimique d'un système dans lequel le conduit pour le gaz reste en permanence ouvert.

A la place du manchon isolant, on peut utiliser une gaine en matériau isolant disposée en contact avec la surface extérieur du réacteur. Au lieu de prévoir des ventilateurs, il suffirait de retirer la gaine du réacteur afin de l'exposer à l'air ambiant. La vitesse de refroidissement du réacteur serait fonction de sa surface exposée à l'air ambiant. De manière alternative, on peut disposer le réacteur dans une enceinte isolante fermée telle qu'un dewar. Dans ce cas la réaction a lieu que très lentement, compensant uniquement les calories perdues à travers la paroi isolante.

Lorsque la réaction a lieu de manière intermittente, on peut profiter des périodes d'arrêt pour régénérer la réaction, même si la réaction n'a pas été complètement terminée. De cette façon, on s'approche à un système continu dans lequel il n'y a pas de temps de régénération longue.

On peut également aménager les manchons isolants 18 et 24 pour en faire des cheminées à tirage qui ne nécessitent pas de ventilateurs mais fonctionnent uniquement par convection. Dans ce cas, les manchons sont avantageusement munis de vannes ou de volets afin de pouvoir les fermer sélectivement, arrêtant ainsi l'échange de calories avec l'air ambiant pendant le phase de régénération. On peut profiter de la convection naturelle dans la cheminée autour du réacteur pour produire une faible quantité de froid à l'évaporateur pendant une longue durée.

Pour compléter la description précédente on donne ci-après, à titre non-limitatif, un exemple de mise en oeuvre du procédé selon l'invention.

EXEMPLE

Afin de refroidir une enceinte isotherme ayant un volume de 80litre, où la température ambiante est de 26°, on dispose autour de l'enceinte un réacteur de 4 litres contenant 460g de $MnCl_2$ mélangé à 280g de graphite expansé. L'évaporateur contient 250g de $NH_3$. L'air à l'intérieur de l'enceinte est recirculé sur l'évaporateur par des ventilateurs. Un bulbe, placé dans l'enceinte, commande la mise en route et l'arrêt des ventilateurs associés à l'évaporateur et au réacteur, par rapport à une température de consigne. Lorsque la température de l'enceinte dépasse la consigne, les ventilateurs sont alimentés, le réacteur se met à réagir est l'enceinte est refroidie. Lorsque la température de l'enceinte est à nouveau sous la consigne, les ventilateurs sont arrêtés. Pendant le cycle de fonctionnement, les ventilateurs se déclenchent toutes les 12 minutes pendant une période de 5,6 minutes.

L'ensemble évaporateur/condenseur peut être remplacé par un deuxième réacteur contenant un autre sel ou un autre mélange de sels.

Une gestion analogue à celle décrite ci-avant peut s'appliquer également à un système thermochimique qui est destiné à produire de la chaleur.

Dans ce cas, on utilise la chaleur produite à la température $T_D$, supérieure à la température To, l'évaporateur puisant l'énergie thermique nécessaire dans l'air ambiant.

Le procédé de gestion selon l'invention s'applique, donc, aux réactions thermochimiques, aux adsorptions solide-gaz, mais également aux absorptions liquide-gaz.

## Revendications

1.   Procédé de gestion d'une réaction thermochimique ou d'une adsorption solide-gaz ou d'une absorption liquide-gaz ayant pour siège un premier réacteur (10) contenant un agent actif apte à réagir de manière réversible avec un gaz, ledit premier réacteur étant relié à un ensemble évaporateur/condenseur (14), respectivement à un second réacteur contenant un autre agent actif, par une liaison dépourvue d'une vanne de commande, le premier réacteur et l'ensemble évaporateur/ condenseur, respectivement le second réacteur étant munis chacun de moyens (18, 20; 24, 26) permettant d'échanger sélectivement des calories avec l'environnement, **caractérisé en ce que** le procédé de gestion comporte les étapes consistant à :

   -   isoler thermiquement le premier réacteur et l'ensemble évaporateur/condenseur, respectivement le second réacteur de leur environnement :
   -   mettre le premier réacteur en communication avec son environnement afin que l'agent actif réagisse avec le gaz, avec production de froid à l'évaporateur, respectivement dans le second réacteur ;
   -   mettre l'évaporateur, respectivement le second réacteur en communication thermique avec son environnement afin de refroidir sélectivement celui-ci ; et
   -   isoler, sélectivement, le premier réacteur ou l'ensemble évaporateur/condenseur, respectivement le second réacteur de leur environnement afin d'arrêter la réaction en un point du cycle réversible.

2.   Procédé selon la revendication 1, **caractérisé en ce que** les étapes de mettre l'évaporateur, respectivement le second réacteur ou le réacteur en communication thermique avec son environnement s'effectuent par convection.

3.   Procédé selon la revendication 1 ou 2, **caractérisé en ce que** les étapes consistant à mettre l'évaporateur, respectivement le second réacteur ou le réacteur en communication thermique avec leur environnement s'effectuent au moyen d'une circulation d'air.

4.   Procédé selon la revendication 3, **caractérisé en ce que** l'air est circulé au moyen de ventilateurs.

5.   Procédé selon l'une des revendications précédentes **caractérisé en ce que** l'on met en oeuvre une réaction thermochimique entre un sel et un gaz, notamment de l'ammoniac, le sel étant dispersé dans un liant comprenant du graphite expansé.

**Patentansprüche**

1. Verfahren zur Durchführung einer thermochemischen Reaktion oder einer Feststoff-Gas-Adsorption oder einer Flüssigkeits-Gas-Absorption, die in einem ersten Reaktor (10) stattfindet, der einen Reaktanden enthält, die reversibel mit einem Gas reagieren kann, wobei der erste Reaktor über eine Verbindung ohne Regelventil mit einer Verdampfer/Kondensator-Anordnung (14) bzw. mit einem zweiten Reaktor verbunden ist, der einen weiteren Reaktanden enthält, wobei der erste Reaktor und die Verdampfer/Kondensator-Anordnung bzw. der zweite Reaktor jeweils mit Mitteln (18, 20; 24, 26) ausgestattet sind, die einen selektiven Wärmeaustausch mit der Umgebung ermöglichen, **dadurch gekennzeichnet, dass** das Durchführungsverfahren die folgenden Schritte umfasst:

   - das thermische Isolieren des ersten Reaktors und der Verdampfer/Kondensator-Anordnung bzw. des zweiten Reaktors von ihrer Umgebung;

   - das Herstellen von Kommunikation zwischen dem ersten Reaktor und seiner Umgebung, damit der Reaktand mit dem Gas reagiert, wobei im Verdampfer bzw. im zweiten Reaktor Kälte erzeugt wird;

   - das Herstellen von thermischer Kommunikation zwischen dem Verdampfer bzw. dem zweiten Reaktor und seiner Umgebung, um diese selektiv abzukühlen; und

   - das selektive Isolieren des ersten Reaktors oder der Verdampfer/Kondensator-Anordnung bzw. des zweiten Reaktors von ihrer Umgebung, um die Reaktion an einem Punkt im reversiblen Zyklus zu unterbrechen.

2. Verfahren nach Anspruch 1, **dadurch gekennzeichnet, dass** die Schritte des Herstellens von thermischer Kommunikation zwischen dem Verdampfer bzw. dem zweiten Reaktor oder dem Reaktor mit der Umgebung durch Konvektion erfolgen.

3. Verfahren nach Anspruch 1 oder 2, **dadurch gekennzeichnet, dass** die Schritte, die darin bestehen, den Verdampfer bzw. den zweiten Reaktor oder den Reaktor in thermische Kommunikation mit der Umgebung zu bringen, mithilfe von Luftzirkulation erfolgen.

4. Verfahren nach Anspruch 3, **dadurch gekennzeichnet, dass** die Luft mithilfe von Ventilatoren zirkuliert wird.

5. Verfahren nach einem der vorangegangenen Ansprüche, **dadurch gekennzeichnet, dass** eine thermochemische Reaktion zwischen einem Salz und einem Gas, insbesondere Ammoniak, eingesetzt wird, wobei das Salz in einem Bindemittel dispergiert ist, das expandierten Graphit umfasst.

**Claims**

1. Process for controlling a thermochemical reaction or a solid-gas adsorption or a liquid-gas absorption located in a first reactor (10) containing a reactive agent able to react in a reversible manner with a gas, the said first reactor being connected, by a connection devoid of a control valve, to an evaporator/condenser assembly (14) for the gas, respectively to a second reactor containing another reactive agent, the first reactor and the evaporator/condenser, respectively the second reactor, each being provided with means (18,20 ; 24,26) permitting selective exchange of calories with the environment, **characterized in that** the process comprises the steps consisting of :

   - thermally isolating the first reactor and the evaporator/condenser assembly, respectively the second reactor, from their environment ;
   - placing the first reactor in communication with its environment in order for the active agent to react with the gas, with the production of cold at the evaporator, respectively in the second reactor ;
   - placing the evaporator, respectively the second reactor, in thermal communication with its environment in order to selectively cool the latter ;
   - selectively isolating the first reactor or the evaporator/condenser assembly, respectively the second reactor, from their environment in order to stop the reaction at a point of the reversible cycle.

2. Process according to claim 1, **characterized in that** the steps of placing the evaporator, respectively the second reactor, in thermal communication with its environment is performed by convection.

3. Process according to claims 1 or 2, **characterized in that** the steps of placing the evaporator, respectively the second reactor in thermal communication with its environment is performed by circulating air.

4. Process according to claim 3, **characterized in that** air is circulated by means of fans.

5. Process according to any of the preceding claims, **characterized in that** a thermochemical reaction is set in operation between a salt and a gas, particularly ammonia, the salt being dispersed in a binder comprising expanded graphite.

FIG.1

FIG.2

FIG.3

FIG.4